# FASCICULE DE BREVET EUROPEEN

(11) **EP 1 269 059 B1**
(45) Date de publication et mention de la délivrance du brevet: **16.02.2005**
(21) Numéro de dépôt: 01919568.4
(22) Date de dépôt: 26.03.2001
(51) Int. Cl.: F16L 15/00, E21B 17/042

(54) **ELEMENT FILETE TUBULAIRE DELARDE RESISTANT A LA FATIGUE**
ERMÜDUNGSBESTÄNDIGES ROHRFÖRMIGES GEWINDEELEMENT MIT RILLE
FATIGUE-RESISTANT THREADED BEVELLED TUBULAR ELEMENT

(30) Priorité: 31.03.2000 FR 0004137
(43) Date de publication de la demande: 02.01.2003
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: VERDILLON, Lionel Mme CHATAIN, F-69380 Dommartin (FR)
(74) Mandataire: Pellicani, Félix Angelo
(86) Numéro de dépôt international: PCT/FR2001/000913
(87) Numéro de publication internationale: WO 2001/075345

(56) Documents cités:
- EP-A- 0 032 265
- WO-A-00/06936
- FR-A- 1 317 815
- JP-A- 58 187 684
- US-A- 5 355 968

## Description

La présente invention concerne un élément fileté tubulaire mâle ou femelle d'un joint fileté tubulaire particulièrement apte à résister aux sollicitations tant statiques que cycliques.
La présente invention concerne aussi un joint fileté tubulaire particulièrement apte à résister aux sollicitations tant statiques que cycliques.

Les joints filetés tubulaires comprennent un élément fileté mâle en extrémité d'un premier tube et un élément fileté femelle en extrémité d'un second tube qui peut être un tube de grande longueur ou un manchon. Ces joints filetés sont notamment utilisés pour constituer des colonnes de tubes de cuvelage ou de production ou des trains de tiges de forage pour des puits d'hydrocarbures ou pour des puits similaires tels que, par exemple, des puits pour la géothermie.

L'American Petroleum Institute (API) définit dans sa spécification API 5B des joints filetés entre tubes de cuvelage ou entre tubes de production avec notamment des filetages coniques à filets triangulaires arrondis ou trapézoïdaux.

D'autres types de joints filetés sont également connus qui mettent en oeuvre des filetages cylindriques ou coniques à double étage : voir par exemple le brevet US 4 521 042 et US 5 687 999.

Jusqu'à il y a peu de temps, les tubes de cuvelage ou de production devaient essentiellement être capables de résister aux différentes combinaisons de sollicitations statiques, (traction axiale, compression axiale, flexion plane, pression intérieure ou extérieure) malgré leur épaisseur limitée résultant de la nécessité, pour pouvoir exploiter un puits profond, d'enfiler les unes dans les autres diverses colonnes de diamètres différents.

Au contraire, les tiges de forage qui ne sont utilisées que pour creuser les puits sont soumis à des sollicitations cycliques (dynamiques) importantes mais par contre ne sont pas soumises à des exigences d'encombrement, un seul train de tiges d'un diamètre donné étant descendu à un moment donné.
Les sollicitations cycliques, si elles ne sont pas strictement limitées, conduisent en service à des ruptures par fatigue initiées à la racine des filets généralement du côté des flancs porteurs qui sont sous charge en service, plus particulièrement au niveau des derniers filets en prise de chacun des éléments filetés des tiges de forage.

On désigne dans la suite du présent document par premiers filets les filets qui, en coupe longitudinale passant par l'axe de l'élément fileté, sont situés du côté de l'extrémité libre de l'élément fileté. Les derniers filets sont par conséquent ceux situés à l'autre extrémité du filetage.

Par filets en prise, on entend tout d'abord les filets d'un joint fileté tubulaire qui transfèrent la charge d'un élément fileté tubulaire à l'élément fileté tubulaire conjugué.

Lorsque le joint fileté est soumis à des efforts de traction, les filets en prise sont ceux dont les flancs porteurs sont en contact et transfèrent la charge d'un élément fileté à l'élément fileté conjugué.

Par extension, on entend par filets en prise d'un élément fileté tubulaire dans le présent document les filets destinés à transférer la charge sur les filets correspondants d'un élément tubulaire conjugué lorsque ces deux éléments filetés tubulaires seront assemblés pour constituer un joint fileté tubulaire.

La position des filets en prise d'un élément fileté tubulaire est connue par le dessin de l'élément fileté. C'est une donnée théorique définie par les dimensions nominales des éléments filetés devant être assemblés.

La position des derniers ou des premiers filets en prise peut donc parfaitement être définie sur un élément fileté tubulaire destiné à un joint fileté.

Le problème de tenue à la fatigue ne se pose cependant désormais plus seulement pour les tiges de forage mais aussi pour les colonnes de tubes d'exploitation de certains puits pour hydrocarbures.

Les joints filetés tubulaires permettant de constituer de telles colonnes doivent alors être capables de supporter à la fois des sollicitations statiques élevées et des sollicitations cycliques.

On rencontre maintenant de telles exigences de tenue aux sollicitations dans les colonnes sous-marines reliant le fond de la mer aux plates-formes d'exploitation en mer des hydrocarbures.

De telles colonnes de tubes dits "risers" dans le langage anglo-saxon de l'homme du métier sont en effet soumises aux sollicitations cycliques causées notamment par les courants qui induisent des mises en vibration de la colonne, par la houle, par les marées et le déplacement éventuel des plates-formes elles-mêmes, toutes sollicitations qui induisent essentiellement des contraintes cycliques de flexion et/ou de traction-compression.

On rencontre également de telles exigences de tenue aux sollicitations dans des puits terrestres, notamment lors de la descente en rotation de tubes pour cimenter les puits dans le cas très fréquent de puits déviés de la verticale présentant des coudes, descente en rotation qui génère alors de la flexion rotative.

C'est pourquoi on a cherché à améliorer les joints filetés tubulaires pour tubes de cuvelage, de production ou pour « risers » de manière à augmenter leur résistance à la fatigue.

L'état de la technique des assemblages filetés tubulaires ou non tubulaires (du type vis-écrou par exemple) propose des moyens pour améliorer la résistance à la fatigue des assemblages filetés soumis à des charges de traction axiales pouvant varier cycliquement.

La demande de brevet WO 00/06936 décrit un élément fileté femelle pour un joint fileté tubulaire dont la surface périphérique extérieure est conique avec un diamètre qui diminue au fur et à mesure que l'on se rapproche de l'extrémité libre femelle de sorte que l'épaisseur de matière sous le filetage est réduite au niveau des premiers filets. Il en résulte aussi une grande sensibilité aux chocs de l'extrémité libre femelle qui est très mince.

Ce document WO 00/06936 décrit également un délardement en surface périphérique intérieure de l'élément fileté mâle au voisinage de son extrémité libre. Ce délardement peu profond s'étend d'après la figure 2 de ce document depuis l'extrémité libre mâle par une partie cylindrique sous la lèvre mâle et se termine par un chanfrein conique sous le deuxième filet mâle de sorte que l'épaisseur de paroi de l'élément est minimale au niveau de la lèvre en dehors des filets en prise.

Aucune fonction particulière n'est divulguée comme associée à ce délardement mais on note qu'il permet d'assurer la continuité de diamètre intérieur à la jonction entre élément mâle et femelle et donc de diminuer tes turbulences dans la circulation du fluide intérieur malgré les différences de diamètre intérieur des tubes dues aux tolérances de fabrication.

De nombreux documents dont le brevet US 5 779 416 et les demandes de brevets JP 04.157.280 et JP 04.157.283 mettent en oeuvre une gorge en forme de U au-delà des derniers filets mâles en prise dans la partie non filetée sous traction de l'élément fileté mâle. Une telle gorge présente notamment l'inconvénient de réduire la section critique du joint fileté qui est la section de la paroi la plus sollicitée en traction axiale et donc de réduire les performances statiques en traction du joint fileté.

Le brevet US 3 933 074 décrit un écrou pour un assemblage boulonné dont le filetage intérieur est interrompu au niveau des premiers filets en prise par plusieurs cannelures axiales en creux disposées régulièrement sur la périphérie du filetage de manière à déplacer la zone de transfert maximale de contrainte de traction axiale entre vis et écrou depuis le premier filet femelle en prise vers le milieu de longueur axiale de l'écrou.

Ces cannelures dont la longueur peut atteindre la moitié de la longueur du filetage et dont la profondeur peut aller jusqu'à 80% de la hauteur de filet augmentent la flexibilité des premiers filets en prise mais réduisent d'environ 20 % la surface portante des filets dans la zone où elles sont réalisées, ce qui est un inconvénient lorsque l'on cherche à obtenir une résistance élevée aux sollicitations statiques et à obtenir un joint fileté tubulaire étanche entre l'intérieur et l'extérieur des tubes.

En outre, les solutions pour les boulons dans lesquels les écrous sont en appui du côté des premiers filets contre la tête de vis (du côté des derniers filets de vis) ne sont pas forcément directement applicables à des joints filetés tubulaires.

Le brevet FR 1 317 815 décrit une gorge annulaire à profil en cuvette relativement peu profonde réalisée sur la surface périphérique extérieure d'un élément fileté femelle d'une tige de forage.

Selon les figures de ce brevet, la gorge est disposée au milieu du filetage et n'affecte pas la paroi au niveau des premiers ou des derniers filets. Elle permet d'étaler les concentrations de contrainte sur l'ensemble du filetage mâle en augmentant les contraintes au niveau des filets situés sous la gorge vers le milieu du filetage.

Ce brevet ne dit toutefois pas à quelles sollicitations correspond les champs de contraintes illustrés dans ces figures (torsion, traction, compression, flexion) ; il semble qu'il s'agisse des contraintes résultant simplement de l'état de vissage des éléments filetés des tiges de forage.

On notera aussi que, toujours selon les figures de ce brevet, la gorge présente un fond plat parallèle à l'axe du joint fileté et des flancs abrupts, sensiblement normaux au fond de gorge et à la surface périphérique extérieure.

Les demandes de brevet JP 58-187684 et EP 0 032 265 décrivent un élément fileté mâle muni d'une gorge annulaire à profil en cuvette réalisée sur la surface périphérique intérieure de l'élément fileté au niveau de la lèvre non filetée en extrémité libre ou essentiellement réalisée au niveau de cette lèvre.

Une lèvre est prévue dans ces deux documents pour améliorer d'autres caractéristiques d'un joint fileté tubulaire que la résistance à la fatigue (résistance au grippage, à la corrosion sous contrainte, verrouillage des éléments filetés en position) et rien ne suggère dans ces deux documents qu'une gorge réalisée sous la lèvre mâle (et éventuellement légèrement débordant sous les deux premiers filets mâles dans le cas du document japonais) puisse améliorer la résistance à la fatigue d'un joint fileté tubulaire.

On a cherché dans la présente invention à réaliser un élément fileté tubulaire mâle ou femelle pour joints filetés tubulaires, qui soit particulièrement résistant à la fois :
a) aux sollicitations statiques, notamment de traction axiale, de compression axiale, de flexion, de torsion, de pression intérieure ou extérieure, de déboîtement lors du vissage, simples ou combinées (par exemple traction + pression intérieure) ;
b) aux sollicitations cycliques, notamment de flexion et de traction-compression.

On a désigné un tel élément fileté dans la suite du présent document comme possédant un profil anti-fatigue.

On a aussi cherché à ce que l'élément fileté tubulaire selon l'invention puisse être réalisé avec toutes sortes de filetages, coniques, cylindriques, combinés cylindro-coniques, à un ou plusieurs étages, à filets trapézoïdaux ou triangulaires, interférents ou non interférents ; les filetages non interférents pourront par exemple être du type décrit dans la demande EP 454 147 à contact simultané des deux flancs avec ceux du filet conjugué (dits encore "rugged thread"), à frettage axial du type décrit dans le document WO 00/14441 ou de type coin à largeur variable comme décrit par exemple dans le brevet US Re 30 647.

On a en outre cherché à ce que l'élément fileté puisse être facilement réalisé et facilement contrôlé.

L'élément fileté selon l'invention doit pouvoir être utilisé pour constituer des joints filetés destinés à des colonnes de tubes de production d'hydrocarbures, de cuvelage de puits ou d'exploitation sous-marine ("risers") ou destinés à des usages similaires.

On a en outre cherché à réaliser des joints filetés tubulaires étanches, notamment aux gaz, même sous sollicitations cycliques.

L'élément fileté selon l'invention doit en variante pouvoir être utilisé pour constituer des trains de tiges de forage.

On a aussi cherché à réaliser un joint fileté tubulaire dans lequel un seul des éléments filetés, par exemple l'élément femelle, a été modifié pour résister aux sollicitations cycliques mais qui accommode un élément fileté conjugué non modifié.

En variante, on a aussi cherché à réaliser un joint fileté tubulaire dans lequel les deux éléments filetés ont été modifiés pour résister aux sollicitations cycliques.

L'élément fileté tubulaire mâle ou femelle dit à profil anti-fatigue est réalisé en extrémité d'un tube et comporte un filetage mâle sur sa surface périphérique extérieure ou un filetage femelle sur sa surface périphérique intérieure selon que l'élément fileté tubulaire est du type mâle ou du type femelle.

Cet élément fileté tubulaire est destiné à être assemblé par vissage à un élément fileté tubulaire du type conjugué (c'est-à-dire femelle si l'élément fileté considéré est mâle et réciproquement) pour constituer un joint fileté tubulaire apte à résister aux sollicitations tant statiques que cycliques.

Cet élément fileté tubulaire comprend un moyen qui augmente la flexibilité des premiers filets en prise et qui vise par là à diminuer le transfert de charge entre les premiers filets en prise de l'élément fileté tubulaire et les derniers filets en prise d'un élément fileté tubulaire conjugué lorsque ces deux éléments forment un joint fileté tubulaire soumis à des efforts de traction.

Ce moyen comprend un délardement en forme de gorge de la paroi de l'élément fileté à partir de la surface périphérique opposée à celle où est réalisé le filetage. La gorge n'affecte pas la géométrie des filets, étant réalisée entre l'enveloppe des fonds de filet et la surface périphérique opposée à celle du filetage.

Elle est réalisée au droit du filetage.

Selon l'invention qui est définie dans la revendication 1, la gorge est telle que, au niveau des premiers filets en prise, l'épaisseur de paroi sous le filetage, c'est-à-dire l'épaisseur de paroi mesurée à partir du fond de filet, est réduite par la gorge.

La fonction de cette gorge est de diminuer la raideur de la paroi sous le filetage au niveau des premiers filets en prise, la raideur de la paroi variant avec l'épaisseur de celle-ci sous le filetage.

Une telle diminution de raideur de la paroi réduit la raideur des premiers filets en prise ou augmente leur flexibilité et diminue donc à leur niveau le transfert de charge en traction et il en résulte une diminution du pic de contraintes au niveau des derniers filets en prise sur un élément fileté conjugué à l'élément fileté considéré et vissé en position à celui-ci pour constituer un joint fileté tubulaire.

A dimension de gorge identique, l'inventeur a constaté que la disposition de la gorge selon l'invention permettait d'optimiser et de garantir les caractéristiques de fonctionnement tant statiques que dynamiques (fatigue) de l'élément fileté considéré vissé en position à un élément fileté conjugué dans un joint fileté tubulaire.

Préférentiellement la gorge débute sous le premier filet en prise du filetage.

Préférentiellement la gorge se termine dans un intervalle axial compris entre une section de milieu du filetage et une section située au niveau des derniers filets en prise.

Préférentiellement la gorge selon l'invention possède une forme de révolution par rapport à l'axe de l'élément fileté tubulaire dans une même section transversale. Elle diminue donc la raideur de la même manière circonférentiellement autour de l'élément fileté tubulaire.

Préférentiellement aussi, la gorge selon l'invention diminue à son aplomb la raideur de la paroi qui supporte les filets de manière variable mais progressive suivant une direction axiale de l'élément fileté tubulaire.

Une telle disposition évite la constitution de concentration locale de contraintes susceptible de détruire l'effet bénéfique de la diminution de la raideur de la structure sur le transfert des charges, voire de créer des amorces de rupture par fatigue.

Au niveau de la gorge selon l'invention, l'épaisseur de paroi sous le filetage est minimale dans un plan transverse préférentiellement situé dans un intervalle entre les premier et sixième filets en prise.

Très préférentiellement, cette épaisseur minimale de paroi sous le filetage est supérieure ou égale à la hauteur de filet et avantageusement sensiblement égale à deux fois la hauteur de filet.

L'idée d'une gorge aussi profonde va contre l'opinion générale qui vise à renforcer la robustesse des éléments filetés compte tenu de leur mise en oeuvre dans des conditions souvent difficiles sur chantier de forage et des sollicitations qu'ils doivent supporter en service malgré une épaisseur limitée.

Très préférentiellement aussi, l'épaisseur de paroi sous le filetage au niveau de la gorge est minimale et constante sur une longueur axiale non nulle.

Très préférentiellement aussi, du fait de la gorge, l'épaisseur de paroi sous le filetage est comprise entre 100 et 120% de l'épaisseur minimale de paroi sous le filetage dans une zone dite "zone de faible raideur".

Cette zone de faible raideur est disposée autour du plan transverse d'épaisseur minimale de paroi sous le filetage et s'étend sur une longueur axiale supérieure ou égale à trois pas de filet.

Ceci permet une diminution sensiblement maximale de raideur dans un intervalle suffisant pour se prémunir des variations de positionnement réel des premiers filets en prise par rapport au dessin du fait des tolérances de fabrication sur l'élément fileté tubulaire.

Préférentiellement, le profil de la gorge est tel que la section critique de l'élément fileté pour les efforts axiaux notamment de traction est située en dehors du délardement , préférentiellement aussi, du fait de la gorge, l'épaisseur de paroi sous le filetage au niveau des trois derniers filets en prise est comprise entre 80% et 100% de celle en zone non délardée. La totalité de la charge de traction doit en effet être absorbée par la section critique de la paroi au niveau du dernier filet du filetage.

Préférentiellement, la gorge possède des flancs dont l'inclinaison par rapport à l'axe de l'élément fileté tubulaire est inférieure ou égale à 45°.

Préférentiellement, le flanc de gorge dirigé du côté de l'extrémité libre de l'élément fileté est globalement plus pentu que l'autre flanc de gorge par rapport à l'axe de l'élément fileté.

Préférentiellement aussi, le profil de gorge est une courbe constituée par une série d'arcs de cercle de rayon fini ou infini raccordés tangentiellement l'un à l'autre, les arcs de cercle de rayon infini correspondant à des segments de droite.

Préférentiellement aussi, la gorge se raccorde à la partie courante non creusée de la surface périphérique où elle est réalisée par une zone de raccordement tangentiel de forme torique.

En variante, la gorge peut être remplie partiellement ou totalement d'un matériau dont le module d'élasticité est inférieur à celui de l'élément fileté tubulaire.

Préférentiellement encore, quel que soit le mode de réalisation de la gorge selon l'invention, les filets sont de forme trapézoïdale.

L'invention concerne également un joint fileté tubulaire à résistance élevée aux sollicitations statiques et cycliques, comprenant un élément fileté tubulaire mâle en extrémité d'un premier tube assemblé par vissage à un élément fileté tubulaire femelle en extrémité d'un second tube au moyen d'un filetage mâle sur l'élément fileté tubulaire mâle et d'un filetage femelle sur l'élément fileté tubulaire femelle.

Par tube, on entend aussi bien un tube de grande longueur qu'un tube de faible longueur tel qu'un manchon.

Le joint fileté tubulaire selon l'invention est caractérisé en ce qu'au moins un des deux éléments filetés tubulaires mâle ou femelle est du type avec délardement selon l'invention exposée ci-avant.

Préférentiellement du point de vue performances en sollicitations cycliques, les deux éléments mâle et femelle sont du type avec délardement selon l'invention.

D'autres avantages et caractéristiques de l'invention apparaîtront dans la description détaillée ci-après et dans les dessins annexés. Description détaillée et dessins annexés pourront donc non seulement servir à mieux faire comprendre l'invention mais aussi contribuer à sa définition, le cas échéant.

Les figures ci-après décrivent de manière non limitative un mode de réalisation et d'utilisation d'éléments filetés tubulaires et de joints filetés tubulaires selon l'invention.

Les figures 1 à 7 sont des demi-coupes longitudinales passant par l'axe de l'élément fileté tubulaire ou du joint fileté tubulaire considéré.
La figure 1 représente un élément fileté tubulaire femelle selon l'invention.
La figure 2 représente un élément fileté tubulaire mâle de l'état de la technique.
La figure 3 représente un joint fileté tubulaire selon l'invention obtenu par assemblage des éléments filetés des figures 1 et 2.
La figure 4 représente un élément fileté tubulaire mâle selon l'invention.
La figure 5 représente un autre joint fileté tubulaire selon l'invention obtenu par assemblage des éléments filetés des figures 1 et 4.
La figure 6 représente un assemblage fileté tubulaire manchonné comportant deux joints filetés tubulaires selon l'invention du type de la figure 3.
La figure 7 représente une variante de l'élément fileté tubulaire femelle selon l'invention de la figure 1.

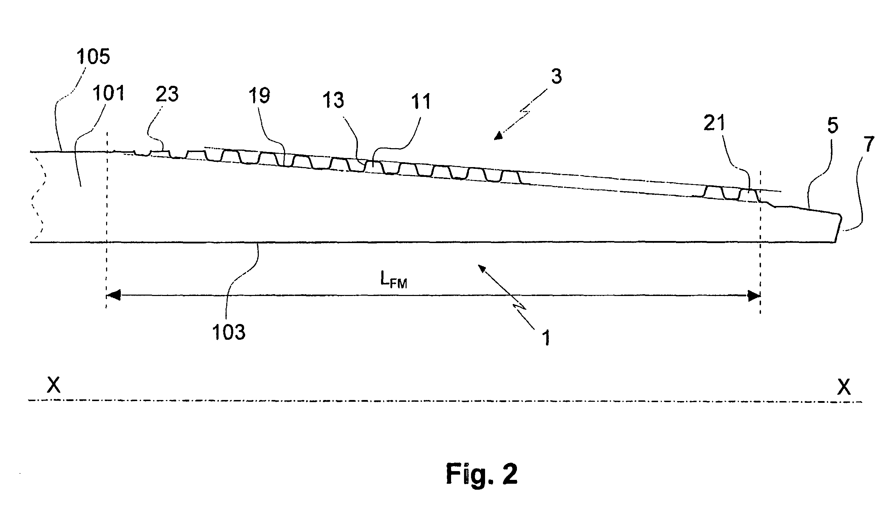

La figure 2 représente un élément fileté tubulaire mâle 1 de l'état de la technique.

Cet élément fileté mâle 1 est réalisé à l'extrémité d'un tube 101.

Il comporte un filetage mâle 3 constitué d'une partie filetée conique de longueur L_{FM} usiné sur la surface périphérique extérieure 105 du tube 101.

Les filets 11 du filetage 3 sont de forme trapézoïdale. Ils possèdent du côté opposé à l'extrémité libre 7 de l'élément fileté 1 un flanc porteur 13 qui permet de transférer la charge d'un élément fileté 3 à l'élément fileté conjugué 4 lorsque ces deux éléments filetés sont assemblés pour constituer un joint fileté tubulaire et sont soumis à une traction axiale.

Le premier filet 21 est celui disposé du côté de l'extrémité libre 7 de l'élément fileté 1.

Le filet 23 est le dernier filet du filetage et est un filet évanouissant, c'est-à-dire un filet dont le sommet est tronqué par la surface périphérique extérieure 105 du tube 101.

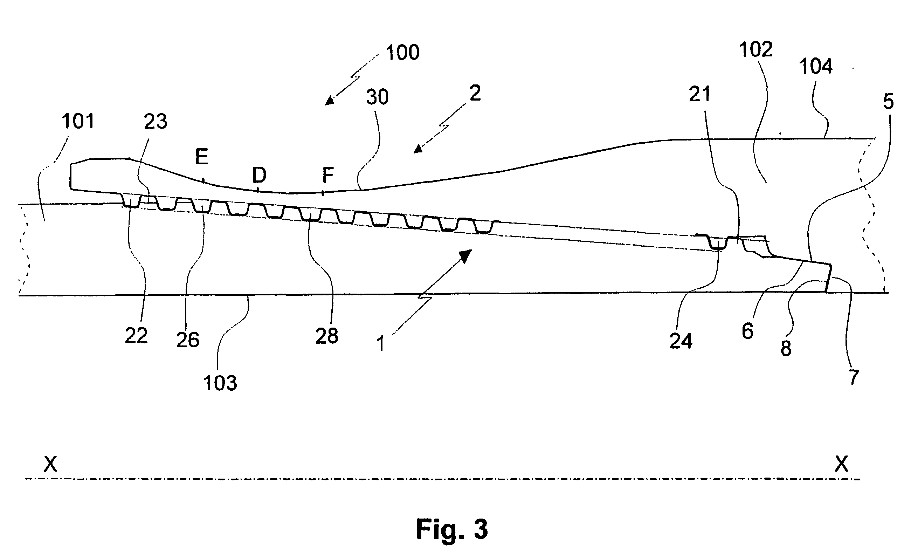

Les filets 21 et 23 sont respectivement les premiers et derniers filets conçus pour être en prise avec les filets correspondants d'un élément fileté tubulaire femelle sur le joint fileté assemblé (voir plus loin la figure 3).

La surface périphérique intérieure 103 de l'élément fileté 1 qui est celle opposée à celle 104 où est réalisé le filetage s'étend uniformément depuis le corps du tube 101 jusqu'à l'extrémité libre 7 de l'élément fileté.

La figure 2 montre aussi une lèvre non filetée optionnelle disposée entre le premier filet 21 et l'extrémité libre 7. Cette lèvre présente sur sa surface périphérique extérieure une surface de portée 5.

La paroi sous le filetage est constituée par la matière de la paroi entre fond de filet 19 et surface périphérique intérieure 103.

Cette paroi n'est pas infiniment rigide, mais possède une raideur, notamment une raideur axiale qui est proportionnelle à l'épaisseur de paroi sous le filetage.

Cette raideur varie très légèrement d'une extrémité à l'autre du filetage du fait de la conicité du filetage, mais cette variation est limitée car la conicité du filetage est faible (6,25 % dans le cas des filetages "Buttress" selon spécification API 5B).

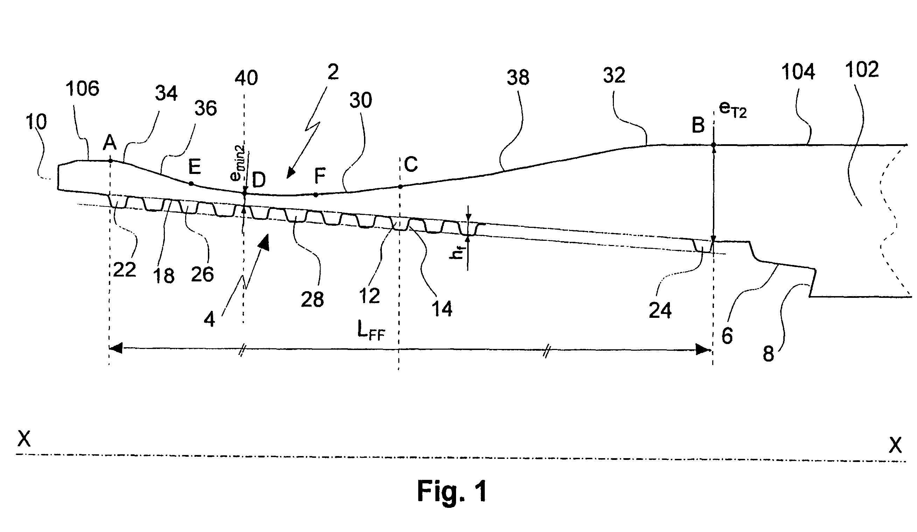

La figure 1 représente un élément fileté tubulaire femelle 2 selon l'invention.

L'élément fileté femelle 2 est réalisé à l'extrémité d'un tube 102.

II comporte un filetage femelle 4 constitué d'une partie filetée conique de longueur L_{FF} usiné dans la surface périphérique intérieure du tube 102.

Ce filetage femelle 4 est conjugué du filetage mâle 3 de l'élément fileté mâle 1, c'est-à-dire qu'ils ont le même pas de filetage, la même conicité, le même diamètre primitif de référence et la même forme de filet.

Les filets 12 du filetage femelle 4 sont aussi de forme trapézoïdale. Ils comportent un flanc porteur 4 conjugué du flanc porteur 13 des filets mâles 3.

Le premier filet est celui 22 disposé du côté de l'extrémité libre 10 de l'élément fileté 2 et le dernier filet est celui 24 disposé à l'autre extrémité du filetage. Ce sont aussi les premiers et derniers filets en prise comme on le verra plus loin.

La surface périphérique externe 104 est celle opposée à la surface où est réalisé le filetage 4.

Cette surface est creusée ou délardée au droit du filetage 4 par une gorge 30 à flanc très peu pentus : le flanc 36 du côté extrémité libre est incliné à 15° et le flanc 38 à 9° par rapport à l'axe XX de l'élément fileté 2 ; le flanc 36 est donc globalement plus pentu que le flanc 38 par rapport à cet axe.

La gorge 30 réduit significativement l'épaisseur de matière sous le filetage et donc la raideur de la paroi sous le filetage.

La réduction d'épaisseur causée par la gorge atteint dans le cas présent plus de 80 % de l'épaisseur de paroi sous le filetage mesurée au point B en zone non délardée.

La gorge débute en A au niveau du premier filet en prise 22.

Du fait de la position de la gorge, la raideur de la paroi du filetage au niveau des premiers filets en prise (filet 22 et les trois à droite de celui-ci sur la figure 1) est diminuée, ce qui augmente par conséquent la flexibilité des premiers filets en prise.

Une gorge qui débuterait en dehors du filetage du côté de l'extrémité libre 10 n'aurait pas plus d'efficacité ou n'aurait guère plus d'efficacité sur la tenue en fatigue et diminuerait la robustesse de l'extrémité libre 10.

Une gorge qui débuterait plus loin sous le filetage risquerait de rendre critique pour les sollicitations statiques de traction axiale une section de paroi sous le filetage au niveau du fond de gorge D ou un peu au-delà alors que la section critique normale est celle sous le dernier filet ; il en résulterait une dégradation des performances statiques du joint fileté, notamment en traction axiale.

La gorge 30 a une forme de révolution autour de l'axe de l'élément fileté tubulaire 12.

Le profil de la gorge 30 en coupe longitudinale est constitué d'une série d'arcs de cercle ou de segments de droite tangents l'un à l'autre de sorte que la raideur de la structure varie de manière très progressive suivant une direction axiale.

Le profil du fond de la gorge est notamment constitué d'arcs de grand rayon pouvant même être infini, ce qui correspond alors à des segments de droite, par exemple parallèles à la conicité du filetage.

L'épaisseur de paroi sous filetage est minimale (eₘᵢₙ) au point D qui est situé entre les 4ème et 5ème filets en prise. Au point D dans le plan de section transverse 40, la raideur de la paroi sous le filetage est de ce fait minimale.

Avantageusement, comme il a été indiqué plus haut, le fond de gorge peut suivre sur une faible longueur axiale, de l'ordre de deux pas de filet, une droite de pente identique à la conicité du filetage de sorte que l'épaisseur de paroi sous le filetage donc la raideur de paroi est minimale et constante sur cette longueur axiale.

L'épaisseur eₘᵢₙ₂ mesurée perpendiculairement à la conicité est égale à la hauteur de filet h_{f}.

La raideur de la paroi sous le filetage est quasiment minimale dans une zone de faible raideur située entre les points E et F où l'épaisseur n'est que peu supérieure à l'épaisseur eₘᵢₙ₂: l'épaisseur y est par exemple comprise entre 100% et 120% de l'épaisseur minimale ; la raideur y varie dans les mêmes proportions par rapport à la valeur minimale de la raideur.

La distance axiale entre les points E et F est comprise entre 3 et 4 pas de filets, les points E et F encadrant le point D du plan 40 où l'épaisseur et la raideur sont minimales.

La gorge 30 se termine en 34 du côté opposé à l'extrémité libre 10, au niveau des derniers filets en prise. En B, juste au-delà du dernier filet en prise, il n'y a plus de gorge.

La raideur de la paroi sous le filetage au niveau des 3 derniers filets en prise n'est donc quasiment pas diminuée par rapport à celle de la paroi non délardée car l'épaisseur de la paroi sous filetage au niveau des derniers filets en prise est comprise entre 80 % et 100 % de l'épaisseur de paroi sous le filetage e_{T2} en zone non délardée (en B par exemple). Il en résulte que la section critique de l'élément fileté 2 pour les sollicitations de traction axiale est la section en B qui n'est pas diminuée par rapport à celle d'un élément fileté semblable mais sans gorge.

La gorge 30 se raccorde en 32 à la surface périphérique extérieure 104 non creusée du tube 102 par une surface torique dont le profil en coupe longitudinale est un arc de cercle.

Elle se raccorde aussi en 34 du côté extrémité libre par une surface torique à une surface cylindrique 106 de diamètre inférieur à celui de la surface 104 de sorte que l'épaisseur de paroi en A est réduite par rapport à l'épaisseur de paroi en B.

On notera la présence optionnelle d'une surface transversale 8 de butée et d'une surface de portée 6 au-delà du filetage 4 en allant vers le corps du tube.

La figure 3 représente l'assemblage des éléments filetés des figures 1 et 2 pour former un joint fileté tubulaire 100. Dans ce joint fileté 100, les filetages mâles et femelles 3, 4 des éléments filetés 1 et 2 ont été vissés par exemple jusqu'à ce que les surfaces transversales optionnelles 7 et 8 des éléments filetés 1 et 2 soient en butée.

Les surfaces optionnelles de portée 5 et 6 sont en contact sous pression de contact et forment une paire de surface de portées d'étanchéité métal-métal.

Le joint fileté tubulaire 100 est soumis à des efforts de traction axiale du fait par exemple du poids des tubes montés verticalement en colonne dans un puits.

Le joint fileté 100 est en outre, dans le cas représenté à la figure 3, soumis à des efforts de traction axiale par la réaction des surfaces transversales 7, 8 mises en butée sous un couple élevé de plusieurs KN.m qui met en traction les flancs porteurs 13,14.

La section critique de l'élément fileté 2 pour les sollicitations de traction axiale n'étant pas diminuée par rapport à celle d'un élément fileté semblable mais sans gorge, les performances statiques du joint fileté 100 pour les sollicitations de traction axiale sont inchangées par rapport à celle d'un joint fileté de l'état de la technique.

A ces efforts statiques peuvent venir se superposer des efforts cycliques.

Chaque filet d'un filetage doit transférer au filet correspondant du filetage conjugué une part de la charge de traction.

Cette part n'est pas constante d'un filet à l'autre d'un même filetage et le rôle de la gorge 30 sur l'élément fileté femelle est d'équilibrer le transfert de charge entre les différents filets, au moins du côté des premiers filets femelles en prise et des derniers filets mâles en prise dans le cas de la figure 3.

Sans cette gorge, le transfert de charge serait beaucoup plus important au niveau de ces filets. Les derniers filets mâles seraient alors soumis à de fortes contraintes encore amplifiées par un effet géométrique de concentration des contraintes à la racine de ces filets dans le rayon de raccordement entre flanc porteur et fond de filet. Les rayons de raccordement seraient alors, par le jeu combiné d'un transfert de charge excessif et d'une concentration de contraintes, le lieu d'amorçage de fissures de fatigue pour des joints filetés soumis à des charges cycliques alors qu'un tel surcroît de contraintes dans le cas de charges statiques est incapable de conduire à des ruptures.

L'équilibrage du transfert de charges obtenu selon la présente invention par diminution de la raideur de la paroi sous les premiers filets femelles (ainsi que le choix connu en soi de grands rayons de raccordement entre flancs porteurs 13, 14 et fonds de filet 19, 18 permettent de réduire suffisamment les contraintes dans les zones critiques pour éviter des risques de rupture par fatigue en service, au niveau des derniers filets mâles en prise correspondant aux premiers filets femelles en prise.

On notera que, de par l'absence de gorge sur l'élément fileté mâle, le transfert de charges reste déséquilibré au niveau des premiers filets mâles en prise et des derniers filets femelles en prise mais on trouve moins souvent de fissure de fatigue initiée dans ces zones sur les joints filetés de l'état de la technique.

On notera enfin que le choix de filets trapézoïdaux est préférable pour éviter le risque de gonflement radial de l'élément femelle au niveau de la zone EF de faible raideur en fin de vissage ; un tel gonflement pourrait causer le déboîtement catastrophique des éléments filetés 1, 2 et la chute de la colonne dans le puits.

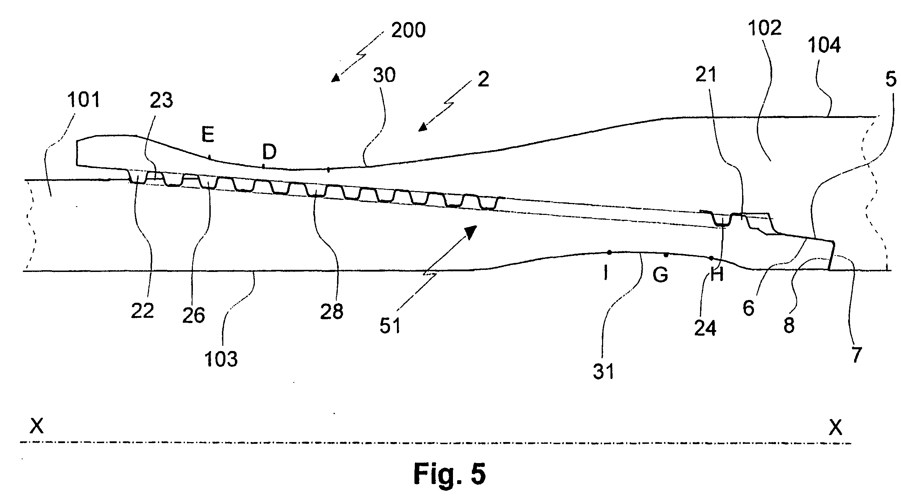

La figure 5 représente une variante 200 de joint fileté tubulaire selon l'invention dans lequel chacun des deux éléments filetés, mâle et femelle est muni d'une gorge.

L'élément fileté femelle 2 est alors identique à celui de la figure 1.

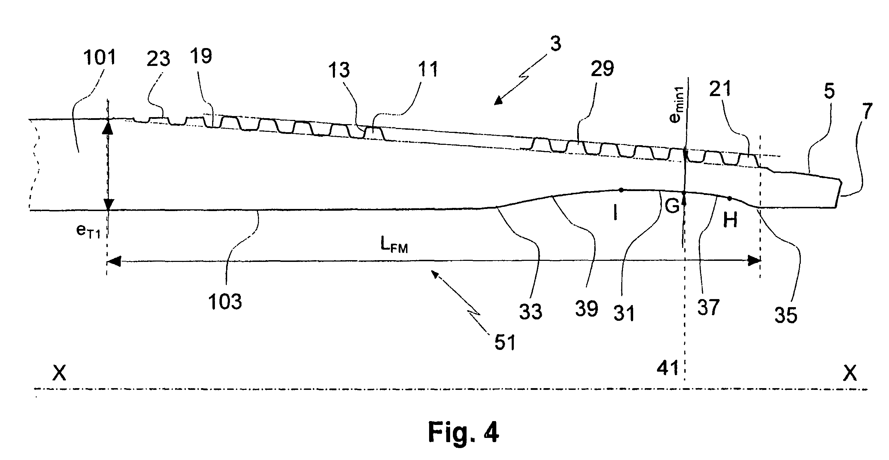

L'élément fileté mâle 51 est représenté à la figure 4.

L'élément fileté mâle 51 de cette figure est dérivé de l'élément fileté mâle 1 de la figure 2 en creusant une gorge 31 dans la surface périphérique intérieure 103 de cet élément fileté, cette surface périphérique 103 étant la surface opposée à la surface où est réalisé le filetage mâle 3.

La gorge 31 démarre sous le premier filet 21 qui est le premier filet en prise (voir figure 5) et se termine vers le milieu du filetage.

Elle diminue la raideur de la paroi sous le filetage au niveau des premiers filets mâles.

Cette diminution est maximale en G situé entre les 2ème et 3ème filets mâles en prise, dans le plan 41 où l'épaisseur de paroi sous filetage est minimale. Cette épaisseur minimale eₘᵢₙ₂ est égale à environ deux fois la hauteur de filet.

La diminution de raideur est sensiblement maximale dans une zone de faible raideur entre H et I, la distance axiale entre ces deux points étant un peu supérieure à trois pas de filet.

Les flancs 37, 39 de la gorge 31 sont très peu pentus ; ils se raccordent à la surface périphérique interne 103 de l'élément fileté mâle 51 par des surfaces toriques au 33, 35.

La gorge 31 elle-même possède un profil constitué d'une série de plusieurs arcs de cercle tangents l'un à l'autre. Les rayons de ces arcs de cercle sont élevés, notamment en fond de gorge.

Compte tenu du profil et de la disposition de la gorge 31, la section critique de l'élément fileté 51 pour les sollicitations de traction axiale est celle au niveau du dernier filet en prise 23, cette section critique n'est pas diminuée par rapport à celle d'un élément fileté semblable mais sans gorge.

Le joint fileté 200 de la figure 5 après vissage en position de l'élément fileté mâle 51 dans l'élément fileté femelle 2 permet d'encore meilleures performances en fatigue que celui 100 de la figure 3 puisqu'une gorge a été réalisée sur chacun des éléments et que le transfert de charge a été uniformisé aux deux extrémités de chaque élément.

Ses performances statiques pour les sollicitations de traction axiale sont inchangées par rapport à celles de joints filetés de l'état de la technique, la section critique des éléments filetés 2 et 51 n'étant pas diminuée par rapport à celle d'éléments filetés semblables mais sans gorge.

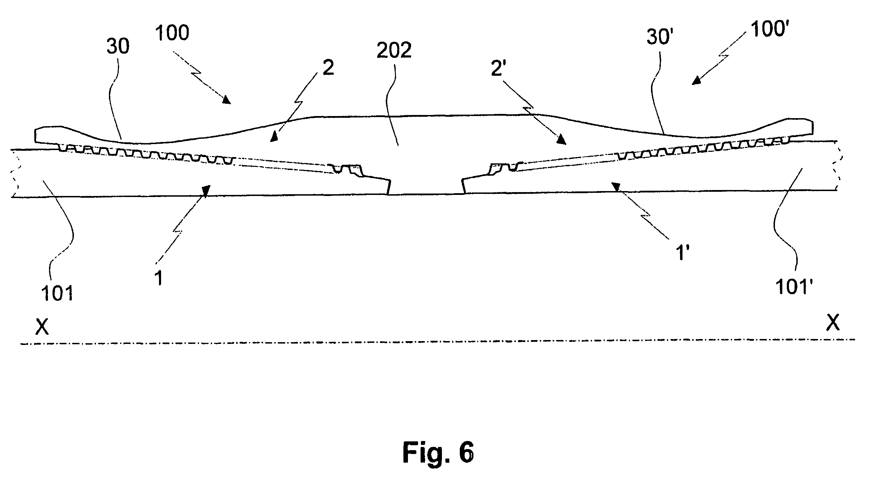

La figure 6 représente un assemblage fileté manchonné constitué de deux joints filetés tubulaires 100, 100'.

Les éléments filetés mâles 1, 1' sont réalisés en extrémité des tubes de grande longueur.

Les éléments filetés femelles 2, 2' sont réalisés tête-bêche sur un manchon tubulaire 202 qui peut être considéré comme un tube très court.

Chaque joint fileté 100, 100' est identique à celui de la figure 3.

Ce type d'assemblage connu n'appelle pas d'autre commentaire.

La fonction des gorges 30, 30' sur le manchon 202 est identique à celle de la gorge 30 de l'élément fileté femelle 2 des figures 1 et 3.

On a cherché à estimer le gain sur la valeur de la contrainte maximale σₘₐₓ dans le rayon de raccordement entre flanc porteur 13 et fond de filet 19 des derniers filets mâles en prise les plus chargés d'un joint fileté tubulaire du type de la figure 3 comparativement aux mêmes filets d'un joint fileté de l'état de la technique sans gorge.

Compte tenu des résultats de tenue en fatigue, on estime que le gain sur la contrainte σₘₐₓ dû à la gorge est de l'ordre de 20 % sur ces filets, ce qui donne un accroissement très important de la durée de vie en fatigue.

La présente invention couvre également des modes de réalisation, en accord avec la revendication 1, permettant de diminuer la raideur de la paroi sous le filetage au niveau des premiers filets en prise de manière équivalente par rapport à la gorge décrite en détail.

La présente invention couvre également des modes de réalisation, en accord avec la revendication 1, où le moyen de diminuer la raideur de la paroi sous le filetage au niveau des premiers filets en prise n'est pas uniquement constitué par la gorge.

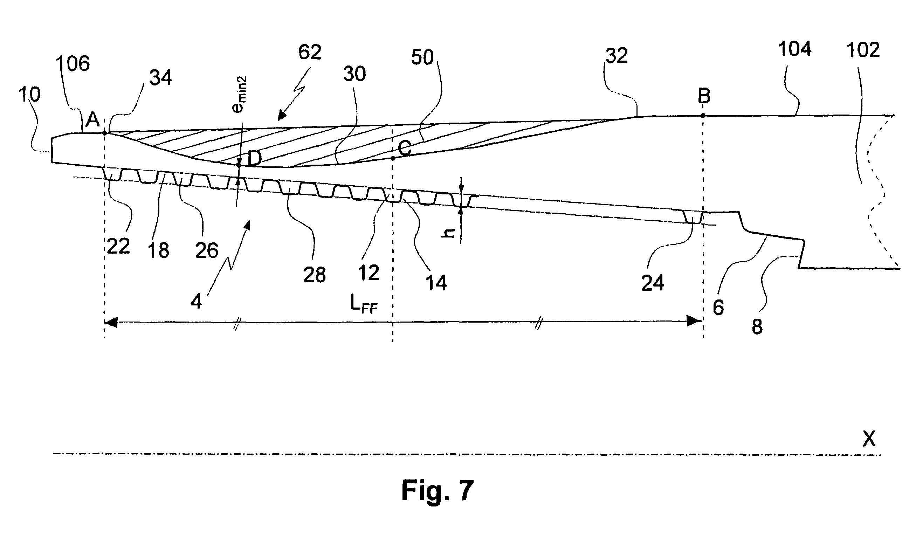

La gorge 30 peut ainsi par exemple, comme représenté à la figure 7, être partiellement ou totalement remplie d'une matière 50 de module d'élasticité inférieure à celle de l'élément fileté tubulaire 62. Cette matière 50 peut notamment être adhérente à la surface de la gorge et être, par exemple, une matière synthétique.

La présente invention couvre aussi des modes de réalisation, en accord avec la revendication 1, d'élément fileté dans lesquels le filetage comporte plusieurs parties filetées distinctes.

## Revendications

1. Elément fileté tubulaire mâle ou femelle (2, 51, 62) à profil anti-fatigue pour un joint fileté tubulaire (100, 200) apte à résister à des sollicitations tant statiques que cycliques, réalisé en extrémité d'un tube (101, 102, 202), comportant un filetage mâle (3) sur sa surface périphérique extérieure ou un filetage femelle (4) sur sa surface périphérique intérieure selon que l'élément fileté est de type mâle ou femelle, ledit élément fileté tubulaire comportant un délardement en forme de gorge de révolution (30, 31) de la paroi de l'élément fileté réalisé au droit du filetage (3, 4) à partir de la surface périphérique (103, 104) de l'élément fileté tubulaire opposée à celle où est réalisé le filetage sans affecter la géométrie des filets (11, 12) du filetage, **caractérisé en ce que** l'épaisseur de la paroi mesurée à partir du fond de filet est réduite par la gorge (30, 31) au moins au niveau des premiers filets en prise de manière à diminuer la raideur de ceux-ci, les premiers filets en prise comprenant le premier filet en prise et les filets suivants, et **en ce que**, au niveau de la gorge, l'épaisseur de paroi mesurée à partir du fond de filet est minimale dans un plan transverse (40, 41) dit plan transverse d'épaisseur minimale de paroi situé dans un intervalle entre le premier filet en prise (21, 22) et le sixième filet en prise (28, 29).

2. Elément fileté tubulaire selon la revendication 1, **caractérisé en ce que**, au niveau de la gorge, le plan transverse d'épaisseur minimale de paroi (40, 41) est situé dans un intervalle entre le deuxième filet en prise et le sixième filet en prise.

3. Elément fileté tubulaire selon la revendication 1 ou 2, **caractérisé en ce que** la gorge débute sous le premier filet en prise (21, 22).

4. Elément fileté tubulaire selon l'une des revendications 1 à 3, **caractérisé en ce que** la gorge se termine dans un intervalle axial compris entre une section de milieu du filetage et une section située au niveau des derniers filets en prise.

5. Elément fileté tubulaire selon l'une des revendications 1 à 4, **caractérisé en ce que**, au niveau de la gorge, l'épaisseur minimale de paroi mesurée à partir du fond de filet (eₘᵢₙ₁, eₘᵢₙ₂) est supérieure ou égale à la hauteur de filet (h_{f}).

6. Elément fileté tubulaire selon l'une des revendications 1 à 4, **caractérisé en ce que** l'épaisseur minimale de paroi mesurée à partir du fond de filet (eₘᵢₙ₁, eₘᵢₙ₂) est sensiblement égale à deux fois la hauteur de filet (h_{f}).

7. Elément fileté tubulaire selon l'une des revendications 1 à 6, **caractérisé en ce que** l'épaisseur minimale de paroi mesurée à partir du fond de filet est constante sur une longueur axiale non nulle.

8. Elément fileté tubulaire selon la revendication 7, **caractérisé en ce que**, dans la zone d'épaisseur minimale de paroi, le fond de gorge suit une pente identique à celle du filetage sur une longueur axiale de l'ordre de deux pas de filet.

9. Elément fileté tubulaire selon l'une quelconque des revendications 1 à 8, **caractérisé en ce que**, du fait de la gorge, l'épaisseur de paroi mesurée à partir du fond de filet est comprise entre 100% et 120% de l'épaisseur minimale de paroi (eₘᵢₙ₁, eₘᵢₙ₂) dans une zone (EF, HI) dite zone de faible raideur disposée autour du plan transverse d'épaisseur minimale de paroi (40, 41), cette zone de faible raideur s'étendant sur une longueur axiale supérieure ou égale à trois pas de filet.

10. Elément fileté tubulaire selon l'une quelconque des revendications 1 à 9, **caractérisé en ce que** le profil de la gorge est tel que la section critique de l'élément fileté pour les efforts de traction est située en dehors du délardement.

11. Elément fileté tubulaire selon l'une quelconque des revendications 1 à 10, **caractérisé en ce que**, du fait de la gorge, l'épaisseur de paroi mesurée à partir du fond de filet au niveau des trois derniers filets en prise est comprise entre 80% et 100% de l'épaisseur de paroi mesurée à partir du fond de filet hors délardement (e_{T1}, e_{T2}).

12. Elément fileté tubulaire selon l'une quelconque des revendications 1 à 11, **caractérisé en ce que** la gorge possède des flancs (36, 37, 38, 39) dont l'inclinaison par rapport à l'axe de l'élément fileté tubulaire est inférieure ou égale à 45°.

13. Elément fileté tubulaire selon la revendication 12, **caractérisé en ce que** le flanc de gorge (36, 37) situé du côté de l'extrémité libre de l'élément fileté tubulaire est incliné par rapport à l'axe (XX) dudit élément fileté tubulaire.

14. Elément fileté tubulaire selon la revendication 12 ou 13, **caractérisé en ce que** le flanc de gorge (36, 37) situé du côté de l'extrémité libre de l'élément fileté est globalement plus pentu par rapport à l'axe de l'élément fileté que le flanc de gorge situé du côté opposé (38, 39).

15. Elément fileté tubulaire selon l'une quelconque des revendications 1 à 14, **caractérisé en ce que** le profil de la gorge est une courbe régulière constituée par une série d'arcs de cercles de rayons finis ou infinis raccordés tangentiellement l'un à l'autre.

16. Elément fileté tubulaire selon l'une quelconque des revendications 1 à 15, **caractérisé en ce que** la gorge se raccorde à la partie courante non creusée de la surface périphérique où la gorge est réalisée par une zone de raccordement tangentiel (32, 33, 35) de forme torique.

17. Elément fileté tubulaire selon l'une quelconque des revendications 1 à 16, **caractérisé en ce que** la gorge est partiellement ou totalement remplie d'un matériau (50) dont le module d'élasticité est inférieur à celui de l'élément fileté tubulaire.

18. Elément fileté tubulaire selon l'une quelconque des revendications 1 à 17, **caractérisé en ce que** le filetage est à filets trapézoïdaux (11, 12).

19. Joint fileté tubulaire (100, 200) destiné à résister à des sollicitations tant statiques que cycliques comprenant un élément fileté tubulaire mâle en extrémité d'un premier tube (101) assemblé par vissage à un élément fileté tubulaire femelle disposé en extrémité d'un second tube (102, 202) au moyen d'un filetage mâle (3) sur l'élément fileté tubulaire mâle et d'un filetage femelle (4) sur l'élément fileté tubulaire femelle, **caractérisé en ce qu'**au moins un des deux éléments filetés tubulaires, mâle ou femelle, est du type (2, 51, 62) selon l'une quelconque des revendications 1 à 18.

20. Joint fileté tubulaire (100, 200) selon la revendication 19, **caractérisé en ce que** les deux éléments filetés tubulaires, mâle et femelle, sont du type (2, 51, 62) selon l'une quelconque des revendications 1 à 18.

## Patentansprüche

1. Rohrförmiges Außen- oder Innengewindeelement (2, 51, 62) mit ermüdungsfestem Profil für eine rohrförmige Gewindeverbindung (100, 200), das sowohl gegenüber statischen als auch zyklischen Beanspruchungen fest ist, am Ende eines Rohrs (101, 102, 202) hergestellt ist, ein Außengewinde (3) an seiner äußeren Umfangsfläche oder ein Innengewinde (4) an seiner inneren Umfangsfläche aufweist, je nachdem, ob das Gewindeelement ein Außen- oder ein Innengewindeelement ist, wobei das rohrförmige Gewindeelement eine Verdünnung der Wand des Gewindeelements in Form einer drehsymmetrischen Kehle (30, 31) aufweist, die ausgehend von der Umfangsfläche (103, 104) des rohrförmigen Gewindeelements, die entgegengesetzt zu derjenigen liegt, in der das Gewinde ausgearbeitet ist, gegenüber dem Gewinde (3, 4) hergestellt ist, ohne die Geometrie der Gewindegänge (11, 12) des Gewindes zu beeinträchtigen, **dadurch gekennzeichnet, dass** die Stärke der Wand, ausgehend vom Gewindeganggrund gemessen, durch die Kehle (30, 31 ) zumindest in Höhe der ersten in Eingriff stehenden Gewindegänge reduziert wird, um deren Steifheit zu verringern, wobei die ersten in Eingriff stehenden Gewindegänge den ersten in Eingriff stehenden Gewindegang und die folgenden enthalten, und dass in Höhe der Kehle die Stärke der Wand, ausgehend vom Gewindeganggrund gemessen, in einer Querebene (40, 41), Querebene minimaler Wandstärke genannt, minimal ist, die sich in einem Zwischenraum zwischen dem ersten in Eingriff stehenden Gewindegang (21, 22) und dem sechsten in Eingriff stehenden Gewindegang (28, 29) befindet.

2. Rohrförmiges Gewindeelement nach Anspruch 1, **dadurch gekennzeichnet, dass** in Höhe der Kehle die Querebene minimaler Wandstärke (40, 41) sich in einem Zwischenraum zwischen dem zweiten in Eingriff stehenden Gewindegang und dem sechsten in Eingriff stehenden Gewindegang befindet.

3. Rohrförmiges Gewindeelement nach Anspruch 1 oder 2, **dadurch gekennzeichnet, dass** die Kehle unter dem ersten in Eingriff stehenden Gewindegang (21, 22) beginnt.

4. Rohrförmiges Gewindeelement nach einem der Ansprüche 1 bis 3, **dadurch gekennzeichnet, dass** die Kehle in einem axialen Zwischenraum zwischen einem Mittelquerschnitt des Gewindes und einem Querschnitt endet, der sich in Höhe der letzten in Eingriff stehenden Gewindegänge befindet.

5. Rohrförmiges Gewindeelement nach einem der Ansprüche 1 bis 4, **dadurch gekennzeichnet, dass** in Höhe der Kehle die minimale Wandstärke, gemessen ausgehend vom Gewindeganggrund (eₘᵢₙ₁, eₘᵢₙ₂), mindestens gleich der Gewindeganghöhe (h₁) ist.

6. Rohrförmiges Gewindeelement nach einem der Ansprüche 1 bis 4, **dadurch gekennzeichnet, dass** die minimale Wandstärke, gemessen ausgehend vom Gewindeganggrund (eₘᵢₙ₁, eₘᵢₙ₂), im wesentlichen doppelt so groß wie die Gewindeganghöhe (h₁) ist.

7. Rohrförmiges Gewindeelement nach einem der Ansprüche 1 bis 6, **dadurch gekennzeichnet, dass** die minimale Wandstärke, gemessen ausgehend vom Gewindeganggrund, über eine axiale Länge ungleich Null konstant ist.

8. Rohrförmiges Gewindeelement nach Anspruch 7, **dadurch gekennzeichnet, dass** in der Zone minimaler Wandstärke der Kehlengrund über eine axiale Länge in der Größenordnung von zwei Gewindegangsteigungen der gleichen Neigung folgt wie das Gewinde.

9. Rohrförmiges Gewindeelement nach einem der Ansprüche 1 bis 8, **dadurch gekennzeichnet, dass** aufgrund der Kehle die Wandstärke, gemessen ausgehend vom Gewindeganggrund, in einer Zone (EF, HI), genannt Zone geringer Steifheit, die um die Querebene minimaler Wandstärke (40, 41) herum angeordnet ist, zwischen 100% und 120% der minimalen Wandstärke (eₘᵢₙ₁, eₘᵢₙ₂) beträgt, wobei diese Zone geringer Steifheit sich über eine axiale Länge von mindestens drei Gewindegangsteigungen erstreckt.

10. Rohrförmiges Gewindeelement nach einem der Ansprüche 1 bis 9, **dadurch gekennzeichnet, dass** das Profil der Kehle so ist, dass der für die Zugkräfte kritische Querschnitt des Gewindeelements außerhalb der Verdünnung liegt.

11. Rohrförmiges Gewindeelement nach einem der Ansprüche 1 bis 10, **dadurch gekennzeichnet, dass** aufgrund der Kehle die Wandstärke, gemessen ausgehend vom Gewindeganggrund, in Höhe der drei letzten in Eingriff stehenden Gewindegänge zwischen 80% und 100% der Wandstärke, gemessen ausgehend vom Gewindeganggrund außerhalb der Verdünnung (e_{T1}, e_{T2}), beträgt.

12. Rohrförmiges Gewindeelement nach einem der Ansprüche 1 bis 11, **dadurch gekennzeichnet, dass** die Kehle Flanken (36, 37, 38, 39) besitzt, deren Neigung bezüglich der Achse des rohrförmigen Gewindeelements höchsten 45° beträgt.

13. Rohrförmiges Gewindeelement nach Anspruch 12, **dadurch gekennzeichnet, dass** die Kehlenflanke (36, 37), die sich auf der Seite des freien Endes des rohrförmigen Gewindeelements befindet, bezüglich der Achse (XX) des rohrförmigen Gewindeelements geneigt ist.

14. Rohrförmiges Gewindeelement nach Anspruch 12 oder 13, **dadurch gekennzeichnet, dass** die Kehlenflanke (36, 37), die sich auf der Seite des freien Endes des Gewindeelements befindet, bezüglich der Achse des Gewindeelements global stärker geneigt ist als die Kehlenflanke, die sich auf der gegenüberliegenden Seite (38, 39) befindet.

15. Rohrförmiges Gewindeelement nach einem der Ansprüche 1 bis 14, **dadurch gekennzeichnet, dass** das Profil der Kehle eine regelmäßige Kurve ist, die aus einer Reihe von endlichen oder unendlichen Kreisbögen besteht, die tangential aneinander anschließen.

16. Rohrförmiges Gewindeelement nach einem der Ansprüche 1 bis 15, **dadurch gekennzeichnet, dass** die Kehle an den laufenden, nicht vertieften Teil der Umfangsfläche anschließt, wo die Kehle durch eine tangentiale torusförmige Anschlusszone (32, 33, 35) hergestellt wird.

17. Rohrförmiges Gewindeelement nach einem der Ansprüche 1 bis 16, **dadurch gekennzeichnet, dass** die Kehle teilweise oder vollständig mit einem Material (50) gefüllt ist, dessen Elastizitätsmodul niedriger ist als der des rohrförmigen Gewindeelements.

18. Rohrförmiges Gewindeelement nach einem der Ansprüche 1 bis 17, **dadurch gekennzeichnet, dass** das Gewinde trapezförmige Gewindegänge (11, 12) aufweist.

19. Rohrförmige Gewindeverbindung (100, 200), die gegenüber sowohl statischen als auch zyklischen Beanspruchungen fest sein soll, mit einem rohrförmigen Außengewindeelement am Ende eines ersten Rohrs (10), das durch Schraubbefestigung mit einem rohrförmigen Innengewindeelement, das am Ende eines zweiten Rohrs (102, 202) angeordnet ist, mittels eines Außengewindes (3) auf dem rohrförmigen Außengewindeelement und eines Innengewindes (4) auf dem rohrförmigen Innengewindeelement zusammengesetzt wird, **dadurch gekennzeichnet, dass** mindestens eines der rohrförmigen Gewindeelemente, das Außen- oder das Innengewindeelement, von der Art (2, 51, 62) nach einem der Ansprüche 1 bis 18 ist.

20. Rohrförmige Gewindeverbindung (100, 200) nach Anspruch 19, **dadurch gekennzeichnet, dass** die beiden Außen- und Innenelemente von der Art (2, 51, 62) nach einem der Ansprüche 1 bis 18 sind.

## Claims

1. A threaded male or female tubular element (2, 51, 62) with an anti-fatigue profile for a threaded tubular connection (100, 200) capable of resisting both static and cyclic stresses, formed at the end of a pipe (101, 102, 202), comprising a male threading (3) on its external peripheral surface or a female threading (4) on its internal peripheral surface depending on whether the threaded element is of the male type or of the female type, said threaded tubular element comprising a waist in the form of a rotational groove (30, 31) in the wall of the threaded element formed in correspondence with the threading (3,4) starting from the peripheral surface (103, 104) of the threaded tubular element opposite that where the threading is formed without affecting the geometry of the threads (11, 12) of the threading, **characterized in that** the thickness of the wall measured from the thread root is reduced by the groove (30, 31) at least at the level of the first engaging threads so as to reduce their stiffness, the first engaging threads comprising the first engaging thread and the following threads, and **in that** at the level of the groove, the thickness of the wall measured from the thread root is a minimum in a transverse plane (40, 41) termed transverse plane of minimum thickness of the wall located in the interval between the first engaging thread (21, 22) and the sixth engaging thread (28, 29).

2. A threaded tubular element according to claim 1, **characterized in that** at the level of the groove, the transverse plane of minimum thickness of the wall (40, 41) is located in the interval between the second engaging thread and the sixth engaging thread

3. A threaded tubular element according to claim I or 2, **characterized in that** the groove starts beneath the first engaging thread (21, 22).

4. A threaded tubular element according to any one of claims 1 to 3, **characterized in that** the groove ends in an axial interval comprised between a cross section in the middle of the threading and a cross section situated at the level of the last engaging threads.

5. A threaded tubular element according to any one of claims 1 to 4, **characterized in that**, at the level of the groove, the minimum thickness of the wall measured from the thread root (eₘᵢₙ₁, eₘᵢₙ₂) is greater than or equal to the thread height (h_{f}).

6. A threaded tubular element according to any one of claims 1 to 4, **characterized in that** the minimum thickness of the wall measured from the thread root (eₘᵢₙ₁, eₘᵢₙ₂) is roughly equal to twice the thread height (h_{f}).

7. A threaded tubular element according to any one of claims 1 to 6, **characterized in that** the minimum thickness of the wall measured from the thread root is constant over an axial length which is larger than zero.

8. A threaded tubular element according to claim 7, **characterized in that**, in the zone where the thickness of the wall is minimum, the groove bottom follows a slope which is identical to that of the threading over an axial length of the order of two thread pitches.

9. A threaded tubular element according to any one of claims 1 to 8, **characterized in that**, because of the groove, the thickness of the wall measured from the thread root is in the range 100% to 120% of the minimum thickness of the wall (eₘᵢₙ₁, eₘᵢₙ₂) in a zone (EF, HI) termed the low stiffness zone disposed about the transverse plane of the minimum thickness of the wall (40, 41), this low stiffness zone extending over an axial length greater than or equal to three times the thread pitch.

10. A threaded tubular element according to any one of claims 1 to 9, **characterized in that** the groove profile is such that the critical cross section of the threaded element for tensile loads is situated outside the waisted zone.

11. A threaded tubular element according to any one of claims 1 to 10, **characterized in that** because of the groove, the thickness of the wall measured from the thread root at the level of the last three engaging threads is in the range 80% to 100% of the thickness of the wall measured from the thread root in the non waisted zone (e_{T}, e_{T2}).

12. A threaded tubular element according to any one of claims 1 to 11, **characterized in that** the groove has flanks (36, 37, 38, 39) the inclination of which with respect to the axis of the threaded tubular element is 45° or less.

13. A threaded tubular element according to claim 12, **characterized in that** the groove flank (36, 37) which is located on the side of the free end of the threaded tubular element is inclined regarding the axis (XX) of said threaded tubular element.

14. A threaded tubular element according to claim 12 or 13, **characterized in that** the groove flank (36, 37) located on the free end side of the threaded element is globally more inclined with respect to the axis of the threaded element than the groove flank directed towards the opposite side (38, 39).

15. A threaded tubular element according to any one of claims 1 to 14, **characterized in that** the profile of the groove is a regular curve constituted by a series of arcs of a circle of finite or infinite radii tangentially joined to each other.

16. A threaded tubular element according to any one of claims 1 to 15 **characterized in that** the groove joins to the current non hollowed portion of the peripheral surface where the groove is formed via a tangential junction zone (32, 33, 35) which is toric in shape.

17. A threaded tubular element according to any one of claims 1 to 16, **characterized in that** the groove is partially or completely filled with a material (50) with an elastic modulus which is lower than that of the threaded tubular element.

18. A threaded tubular element according to any one of claims 1 to 17, **characterized in that** the threading has trapezoidal threads (11, 12).

19. A threaded tubular connection (100, 200) for resisting both static and cyclic stresses, comprising a male threaded tubular element at the end of a first pipe (101) connected by screwing to a female threaded tubular element disposed at the end of a second pipe (102, 202) using a male threading (3) on the male threaded tubular element and a female threading (4) on the female threaded tubular element, **characterized in that** at least one of the two threaded tubular elements, male or female, is of the type (2, 51, 62) according to any one of claims 1 to 18.

20. A threaded tubular connection (100, 200) according to claim 19, **characterized in that** the two threaded tubular elements, male or female, are of the type (2, 51, 62) according to any one of claims 1 to 18.
